# EUROPEAN PATENT SPECIFICATION

(11) **EP 1 811 741 B1**
(45) Date of publication and mention of the grant of the patent: **15.10.2008**
(21) Application number: 06290173.1
(22) Date of filing: 20.01.2006
(51) Int. Cl.: H04L 29/06

(54) **Seamless session mobility for multimedia streams**
Nahtlose mobile Sitzungen für Multimedia-streams
Mobilité de session continue pour des flux de données multimédia

(43) Date of publication of application: 25.07.2007
(73) Proprietor: Alcatel Lucent, 75008 Paris (FR)
(72) Inventor: Oberle, Kasten, 68199 Mannheim (DE); Domschitz, Peter, 70191 Stuttgart (DE); Tomsu, Marco, 71254 Ditzingen (DE)
(74) Representative: Schmidt, Werner Karl

(56) References cited:
- WO-A-20/05084128
- US-A1- 2003 097 484
- SOHEL K ET AL: "Conceptual Deployment Scenarios of Session/Border Control(S/BC) Functions; draft-sohel-sipping-s-bc-concept-arch-00.t xt" IETF STANDARD-WORKING-DRAFT, INTERNET ENGINEERING TASK FORCE, IETF, CH, 8 July 2005 (2005-07-08), XP015040091 ISSN: 0000-0004
- NSIS WORKING GROUP M BRUNNER NEC: "Requirements for QoS Signaling Protocols; draft-ietf-nsis-req-01.txt;" IETF STANDARD-WORKING-DRAFT, INTERNET ENGINEERING TASK FORCE, IETF, CH, vol. nsis, no. 1, April 2002 (2002-04), XP015024488 ISSN: 0000-0004
- ANTONELLA NAPOLITANO CSELT GIUSEPPE RICAGNI ITALTEL: "UMTS all-IP Mobility Management, Call and session control Procedures; draft-ricagni-megaco-umts-all-ip-00.txt;" IETF STANDARD-WORKING-DRAFT, INTERNET ENGINEERING TASK FORCE, IETF, CH, 24 March 2000 (2000-03-24), XP015034533 ISSN: 0000-0004
- BHATIA S RAMACHANDRAN G KULSHRESHTHA R DEVDHAR NEXTONE COMMUNICATIONS M: "SIP Session Border Control Requirements; draft-bhatia-sipping-sbc-00.txt" IETF STANDARD-WORKING-DRAFT, INTERNET ENGINEERING TASK FORCE, IETF, CH, 28 January 2005 (2005-01-28), XP015010853 ISSN: 0000-0004

## Description

### Background of the invention

The invention relates to a method for seamless handover of a multimedia stream session to a roaming terminal, in particular for conversational real-time services such as Voice over IP (VoIP) or Multimedia over IP (MMoIP), in Next Generation Network (NGN) systems, even in - but not limited to - a cross-operator scenario.

The present invention also relates to a mediating network element for providing a multimedia stream to a roaming terminal in a communication network as well as to a mobile terminal for use as a roaming terminal in a communication network.

In addition, the present invention relates to a communication network, comprising:
- a home network,
- a plurality of network domains operatively attached to the home network,
- a plurality of terminals located in different network domains and adapted to communicate over the communication network in a multimedia stream session.

Furthermore the present invention relates to a computer program product for use in a communication network of the above-mentioned type.

Conversational real-time services of the above-mentioned types generally employ a multimedia stream session for transferring data packets between communicating terminals. In order to support mobility of mobile terminals, e.g. cellular phones, for real-time conversational service sessions, so-called seamless session mobility or seamless handover must be ensured in heterogeneous network access environments for future converged fixed / mobile (IMS / TISPAN - IP multimedia subsystem / Telecoms & Internet converged Services & Protocols for advanced Networks) multi-operator networks. In the present context, this means supporting the "transfer" of an already existing multimedia stream session to another IP domain, e.g. when changing a network access domain, in particular in the case of two different WLAN domains or when changing network access of a terminal from a public network (3G / 4G) to a private network (WLAN / DSL).

Proposed prior art solutions to the above-defined issue comprise mobility detection and management capabilities provided by standard Session Initiation Protocol (SIP), e.g. by using the SIP "re-INVITE" message, and mobile IP technologies, which are being developed and standardized for mobile networks. However, the prior art approaches suffer from inherent disadvantages and limitations. For instance, mobility mechanisms provided by SIP, e.g. making use of SIP "re-INVITE" messages to redirect an ongoing session, have a number of drawbacks: 1) There is a lack of privacy, because the SIP User Agent Server (UAS, Callée) can observe the motion of a moving User Agent Client (UAC, Caller). 2) The required means for detection of changing transfer conditions within the client application are complex due to cross-layer problems. 3) Initiation of a session redirect via the SIP signalling path may take too long, which leads to a session interruption during an unacceptably long time interval (timeframe).

Mobile IP technology, too, suffers from major limitations: 1) All terminals as well as the totality of home networks and visited networks involved in the communication - even private WLANs - need to support the required mobile IP standards, which entails installation of costly new network elements. 2) Mobile IP technology re-quires a large number of additional signalling messages and additional packet over-head. 3) In many cases the data packets have to be routed through the home network of the pro-vider. 4) Session handover is "slow", hence there is no seamless session continuity.

US 2003/097484 A1 discloses a method and system for providing transparent mobility support wherein a session establishment service of a corresponding host is employed to find out a changed network address of a mobile host through operation of session re-establishment. For real-time applications, it is proposed to use IP layer tunneling of data packets to ensure session continuity. In this context, the mobile host actively notifies all corresponding parties about its new address by means of SIP INVITE messages. Data buffering may be used at the corresponding host in order to fill the time gap during session re-establishment. In this way, the method and corresponding system are rather intricate, thus resource-demanding, and not well suited for fast and seamless session mobility.

Sohel et al., "Conceptual Deployment Scenarios of Session/Border Control(S/BC) Functions; draft-sohel-sipping-s-bc-concept-arch-00.txt" IETF STANDARD-WORKING-DRAFT, INTERNET ENGINEERING TASL FORCE, IETF, CH, 8 July 2005, solely focuses on deployment scenarios of Session/Border Controllers (S/BC) as such without any particular connection to cross-layer seamless multimedia session mobility.

WO 2005/084128 A, too, discloses only use of (standard) SIP for attaching and detaching of users, e.g., in case of location changes.

### Object of the invention

It is the object of the present invention to provide a different and less intricate method capable of supporting session mobility detection and session re-direction which allows for fast and seamless handover of a multimedia stream session. It is also an object of the present invention to provide a communication network as well as individual network components needed to translate said method into practise.

### Summary of the invention

The object is achieved by a method for seamless handover of a multimedia stream session to a roaming terminal according to claim 1.

According to a second aspect of the present invention the object is also achieved by providing a network mediating element according to claim 5.

According to a third aspect of the present invention the object is also achieved by providing a mobile terminal according to claim 8, possibly via an alternative mediating network element.

According to a fourth aspect of the present invention the object is achieved by providing a communication network according to claim 9.

According to a fifth aspect of the present invention the object is achieved by providing a computer program product for use in a communication network according to claim 10.

Thus, according to a general idea of the present invention, there is a fast detection of a new IP address of a roaming terminal at the media overlay level within a mediating network element of the communication network. Furthermore, the mediating network element secures the session context (signatures, coding schemes, etc.) for to uniquely identify the roaming terminal. Following an immediate self-learning of the changed IP address, said mediating network element checks the session identifiers - thus identifying the roaming terminal - and redirects the ongoing media stream to a new IP address. Then, the network tries to discover possibly better suited mediating network elements for data transfer to the new IP address by means of control level procedures, thus providing a truly seamless handover mechanism, i.e. no media packet loss, which furthermore remains anonymous for the other call partner. Mediating network elements possibly better suited for data transfer may be identified according to at least one predefined criterion, such as Quality of Service (QoS). Of course, the mediating network element suited best for the data transfer may be the first network element.

In a further embodiment of the method in accordance with the present invention the alternative mediating network elements are determined by using a standard protocol, in particular Session Initiation Protocol (SIP). In this way, only limited modification with respect to existing solutions is required.

In another embodiment of the method in accordance with the present invention the complete handover is performed using a standard session redirect procedure, in particular an SIP-based session redirect procedure, executed by a network softswitch, the mediating network elements and the roaming terminal.

Preferably, in yet another embodiment of the method in accordance with the present invention the media overlay layer uses a standard protocol, in particular Real-time Transport Protocol (RTP). In a corresponding further embodiment of the mediating network element in accordance with the present invention, said element is devised as a Session Border Controller (SBC) and adapted to using Real-time Transport Protocol (RTP) for providing the multimedia stream and Session Initiation Protocol (SIP) for control purposes.

In a further embodiment of the mediating network element in accordance with the present invention, said mediating network element is operably connected with a network softswitch, at least one other mediating network element for alternatively providing the multimedia stream to the roaming terminal, and with the roaming terminal, wherein the mediating network element is further adapted to perform a complete handover using a standard session redirect procedure, in particular a SIP-based session redirect procedure, executed by the network softswitch, the mediating network elements and the roaming terminal for providing a multimedia stream to the roaming terminal by means of the other mediating network element.

Further advantages and characteristics of the present invention can be gathered from the following description of a preferred embodiment given by way of example only with reference to the enclosed drawings. The features mentioned above as well as below can be used in accordance with the present invention either individually or in conjunction. The embodiments mentioned are not to be understood as an exhaustive enumeration but rather as examples with regard to the underlying concept of the present invention.

### Drawings

- Fig. 1: is a schematic diagram of a communication network in accordance with the present invention;
- Fig. 2: is a schematic block diagram of a mediating network element in accordance with the present invention;
- Fig. 3: is a schematic block diagram of a mobile terminal in accordance with the present invention;
- Fig. 4: is another schematic block diagram of the communication network of Fig. 1 for to illustrate the method in accordance with the present invention; and
- Fig. 5: is a further embodiment of the communication network of Figs. 1 and 4 for to illustrate the method in accordance with the present invention.

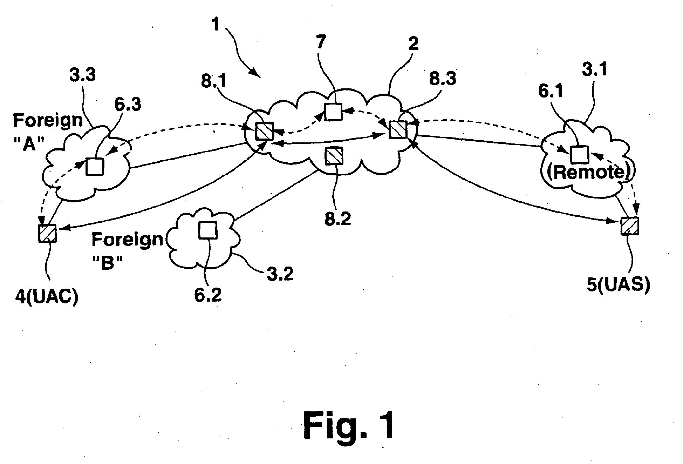

**Fig. 1** shows a schematic diagram of a communication network **1** in accordance with the present invention. The communication network 1 comprises a home network **2** and a plurality of network domains **3.1 - 3.3,** which are operatively attached to the home network 2. In the embodiment of Fig. 1, said attachment is illustrated by means of straight solid lines between the home network 2 and a respective network domain 3.1 - 3.3. The individual network domains can also be referred to as a Remote Domain 3.1, Foreign Domain "A" 3.3 and Foreign Domain "B" 3.2. A first terminal **4** is operatively connected (attached) with network domain 3.3. Said terminal 4 is devised as a mobile terminal which is free to move (roam) within the communication network 1. In this way, mobile terminal 4 could alternatively be attached to other network domains, e.g. network domain 3.2, of the communication network 1, as will be explained in detail below. A further terminal **5** is attached to network domain 3.1. By way of example and without limitation, terminal 5 is devised as a stationary terminal.

In the embodiment shown, each of the network domains 3.1 - 3.3 comprises an interface element **6.1 - 6.3,** respectively, serving as the initial signalling interface between an attached terminal, e.g. terminals 4, 5, and the network, i.e. an access domain such as network domains 3.1, 3.3 and / or the home network 2. The home network 2 further comprises a control element **7** as well as a plurality of mediating elements **8.1 - 8.3,** a function of which will now be explained in detail.

In the embodiment of Fig. 1, the interface element 6.1 - 6.3 are devised as Proxy Call Session Control Functions (P-CSCFs), i.e. they constitute the initial interface (i.e., a SIP-server) between a terminal and an lP multimedia subsystem (IMS), i.e., the home network 2, which could also be referred to as an lP multimedia core network (lM CN) in the present example. An address of the P-CSCF is discovered as part of standard session management procedures involved with establishing lP connectivity, as known to a person skilled in the art. Functions of the P-CSCFs include a forwarding of SIP control messages received from a terminal, e.g. terminals 4, 5, wherein the latter either function as a UAC (SIP User Agent Client) or as an UAS (SIP User Agent Server), as further known to a person skilled in the art. In the shown embodiment, mobile terminal 4 functions as a UAC, thus performing client functionality, i.e. it generates a request, which in turn is serviced by a UAS. On the other hand, the corresponding server functionality is provided by terminal 5, which responds to requests made by SIP UAC terminal 4. The control element 7 of home network 2 can be identified with a Core Session Control Function (CSCF), which provides session control for subscribers accessing services within the lM CN. Therefore, in essence the CSCF 7 is a SIP server, which has responsibility for interacting with network databases for mobility and specific servers for security purposes.

Furthermore, in the communication network of Fig. 1 the mediating network elements 8.1 - 8.3 are devised as Session Border Controllers (SBCs). An SBC generally is a device put into a communication path between a calling party and a called party in a communication network. The SBC acts as if it were the called party and places a second call to the called party, such that not only signalling traffic but also the media traffic (voice, video, etc.) crosses the SBC, as known to a person skilled in the art, such that an SBC effectively functions as a media proxy with respect to the media data traffic. The SBCs 8.1 - 8.3 are operatively connected with the control element 7 (CSCF), which effectively functions as or interacts with a softswitch (not explicitly shown) of the communication network 1.

In the scenario of Fig. 1, UAS 5 and UAC 4 are connected in a multimedia stream session for exchanging a multimedia data stream. To this end, UAC 4 attached to network domain 3.3 communicates with UAS 5 over an already established signalling path linking the network elements designated by reference numerals 4/6.3/8.1/7/8.3 / 6.1 / 5, as indicated by means of dashed arrows, and over a media path linking the network elements designated by reference numerals 4/8.1/8.3/5, as indicated by means of solid arrows. In this context, said signalling path is also referred to as being located on a control plane / control level of the communication network 1, whereas said media path is also referred to as being located on an (overlay) media level of the communication network. In this way, the terminals 4, 5 exchange SIP control messages on said signalling path, whereas the multimedia stream data is communicated on said media path.

Generally, during transmission of real-time media streams all of the data packets constituting the stream are sent without confirmation of reception in order to increase performance (e.g., by employing UDP - User Datagram Protocol instead of TCP - Transmission Control Protocol). A possible packet loss is "covered up" in the audio / video receiver, thus resulting in an acceptable quality in case of low packet loss. Making use of the usually bi-directional connections, quality information is exchanged in the form of a feedback, e.g. for controlling a decrease of transmitter bit rate. In the case of uni-directional services (IPTV / video) considered here, there is a (thin) return channel for transmission of this kind of information.

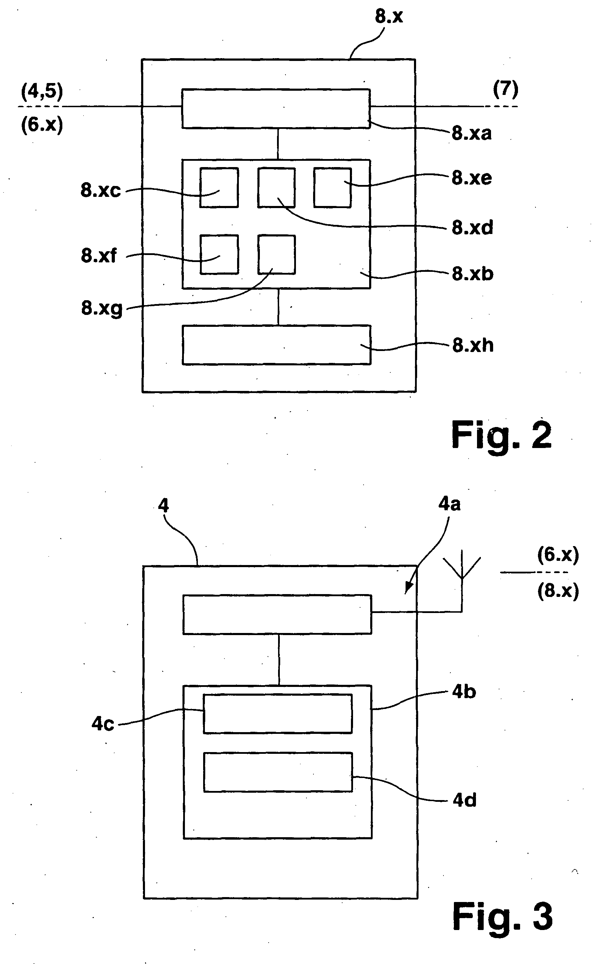

For use in the communication system in accordance with the present invention and for to translate into practise the method in accordance with the present invention, at least the mobile terminal 4 and the mediating network elements 8.1 - 8.3 of Fig. 1 comprise additional features and functionalities which will now be explained in detail with reference to appended Figs. 2 and 3.

**Fig. 2** shows a schematic block diagram of one of the network mediating elements **8.x** (x = 1, 2, 3) of Fig. 1. The network mediating element 8.x comprises communication means **8.xa,** operatively connected with the CSCF 7 on one side and with a terminal 4, 5 as well as an interface element **6.x** (x = 1, 2, 3), respectively, on the other side. The mediating network element 8.x further comprises data processing means **8.xb** providing observation means **8.xc,** securing means **8.xd,** stream redirection means **8.xe,** session redirecting means **8.xf,** and binding modification means **8.xg,** the functioning of which will become apparent later. In operative connection with the data processing means 8.xb, the network mediating element 8.x further comprises storage means **8.xh.**

**Fig. 3** shows a schematic block diagram of a mobile terminal 4 for use in the communication network 1 of Fig. 1. The mobile terminal 4 comprises communication means **4a,** which are operatively connected with the interface element 6.x of a current network domain, to which the mobile terminal 4 is attached, and with a suitable network mediating element 8.x (cf. Fig. 2). The mobile terminal 4 further comprises data processing means **4b** providing communication continuation means **4c** and re-registration means **4d,** the function of which will also become apparent later.

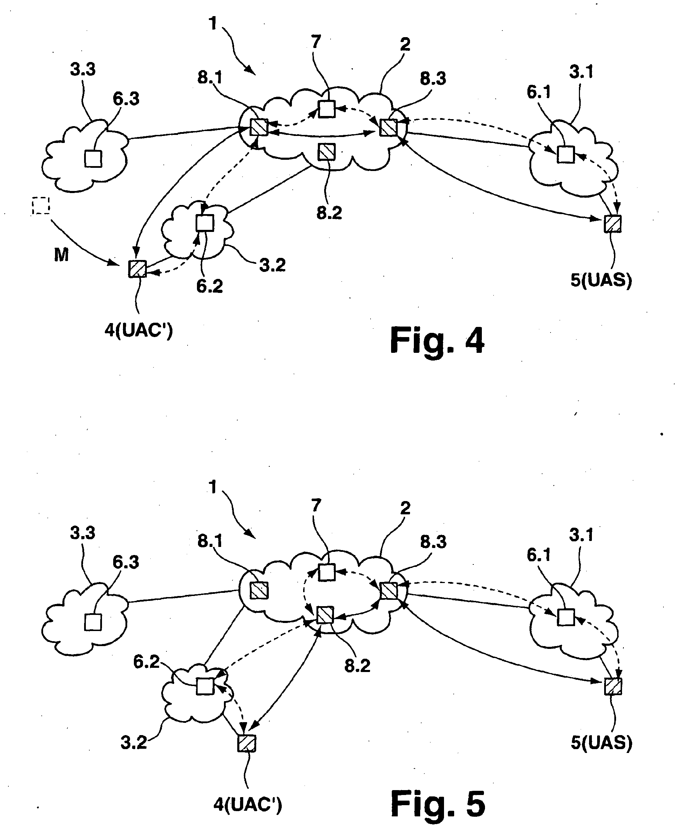

**Fig. 4** schematically illustrates a further embodiment of the communication network 1 in accordance with the present invention. During operation of a communication network 1, i.e. during an ongoing multimedia stream session involving terminals 4, 5, the network mediating element 8.1 secures session identifiers of the ongoing multimedia stream session by means of the securing means 8.xd in conjunction with the storage means 8.xh (Fig. 2), wherein said session identifiers, e.g. signatures and / or coding schemes or the like, allow identification of at least the mobile terminal 4, i.e. the logical source of the corresponding data. Subsequently, the mobile terminal 4 (UAC) moves to a new network position denoted UAC' in the direction of arrow M, such that the mobile terminal 4 is now attached to a different network domain, i.e. network domain 3.2 (Foreign "B"), while the already established multimedia stream session is in progress. In accordance with the present invention and as indicated by means of a solid arrow in Fig. 4, the mobile terminal 4 (UAC') continues to send media packets on to the mediating network element 8.1, as in the case of the embodiment of Fig. 1. This functionality is provided under the action of the communication continuation means 4c provided on the mobile terminal 4 (cf. Fig. 3). In parallel, the mediating network element 8.1 detects the mobility event (arrow M) of the mobile terminal 4, i.e. of UAC (Fig. 1) to UAC' (Fig. 4). For instance, said mobility event can be detected by observing an lP / UDP source change under action of the observing means 8.xc provided at the mediating network elements 8.x (Fig. 2). In this way, according to the present invention, there is a fast detection of the new lP address of mobile terminal 4 on the media overlay level within a respective network mediating element 8.x, which effectively functions as a media proxy. Preferably, in the context of the present invention said media overlay level is implemented by using session-oriented secured RTP - Real-time Transport Protocol. In this way, according to the invention there is an immediate self-learning of the changed IP address of the UAC on mobile terminal 4 by the network mediating element 8.1. In other words: The network mediating element 8.1 observes that the incoming data packets have originated from a new source address, e.g. a new source lP address. The network mediating element 8.1 then checks the session identifiers previously secured in the storage means 8.xh (Fig. 2), thus detecting that the data actually originates from the same logical address as before owing to an unchanged signature / coding. In this way, the mediating network element immediately "learns" about the new address, e.g. IP address, of the mobile terminal 4 and then redirects the session media stream to said new address under action of the stream redirection means 8.xe (Fig. 2). This effectively represents a "cross-layer approach", wherein a logical end-to-end connection is secured and authenticated on a higher layer (e.g., secured RTP) such that the system can react appropriately to address changes on a lower layer (e.g., UDP / lP).

For a short intermediate time only, as depicted in Fig. 4, mediating network element 8.1 continues to send data packets, i.e. media packets arriving directly from the UAC' and control packets arriving via P-CSCF 6.2, respectively, to the mediating network element 8.3 and to the control element 7 (CSCF) as before. This requires modification of lP / UDP bindings for the corresponding RTP traffic to be performed by the binding modification means 8.xg (Fig. 2).

Since the intermediate communication path used in the embodiment of Fig. 4 is suboptimal, in accordance with the present invention it is used for a short time only. Therefore, in parallel to the seamless continuation of media transfer, a standard SIP-based session redirect procedure is performed on the signalling / control plane of the communication network 1, which involves sending control messages (e.g., SIP "REGISTER") via the mediating network elements (SBCs) 8.1 - 8.3. Said session redirect procedure is performed for to determine a possibly better suited mediating network element in order to achieve a complete handover of the ongoing multimedia stream session according to at least one predefined criterion, e.g. which ensures enhanced Quality of Service (QoS). As stated above, the session redirect procedure is executed by the softswitch (not shown) of the communication network 1, the mediating network elements 8.1 - 8.3 and the mobile terminal 4. In this context, the mediating network elements 8.x use their respective session redirecting means 8.xf (Fig. 2) - preferably in conjunction with the secured context information provided by the securing means 8.xd of the mediating network element 8.1 -, whereas the mobile terminal 4 uses its re-registration means 4d (Fig. 3).

In other words: The mobile terminal 4 is completely "moved" the a new access network. A preferred embodiment may include registration of the UAC' (terminal 4) at the network, e.g. the control element 7 (CSCF), through signalling. The network then determines the best attachment point - using discovery mechanisms which are not part of the present application. Said attachment point will generally depend on the new access network of the UAC', i.e. mediating network element 8.2 in the present example, and the network transmits the corresponding information to both the UAC' and to the other network elements involved, i.e. the mediating network elements 8.1 - 8.3.

The above-described situation after re-registration of UAC' (terminal 4) at the CSCF of the home network 2 via the alternative mediating network element 8.2 is depicted in Fig. 5. ln the embodiment of Fig. 5, the control element 7 (CSCF) initiates the call transfer to the mediating network element 8.2, i.e., UAC' (mobile terminal 4) is informed via SIP signalling on the control plane (for instance by using a SIP "re-INVITE" message) to send packets (control and media packets) to the alternative mediating network element 8.2 instead of mediating network element 8.1 (cf. Figs. 1, 4). This results in a new destination lP / UDP for packets sent from UAC' in the direction of UAS (terminal 5) and mediating network element 8.2, respectively. In this way, the multimedia stream session between terminals 4 and 5 is continued over an optimized communication path.

As known to a person skilled in the art, at least the above-described functionalities of the mobile terminal and the mediating network elements can be implemented thereon by means of a suitable computer program product comprising appropriate program code sequences. Said computer program product may be provided to the entities in question on any suitable form of computer readable media, e.g. an optical data carrier such as a CD or DVD or via a data network.

In the forgoing description, the protocols lP, UDP, and TCP have been mentioned by way of example only. As will be appreciated by a person skilled in the art, any other protocol employing source and destination addresses could be used in the context of the present invention.

The present invention thus provides support for session mobility detection and session redirection by means of special features provided in the communication network, i.e. the mediating network elements and the mobile terminal(s), respectively. Under action of these special features, the present invention bridges the timeframe between the event of changing a terminal IP address and the event of having completed a subsequent re-registration and session redirection on the control plane of the communication network. In accordance with the present invention as described above, this is done in a seamless way for the end-user.

## Claims

1. A method for seamless handover of a multimedia stream session to a roaming terminal (4), **characterized in that** a first mediating network element (8.1) comprised in a communication path to the roaming terminal (4) secures a logical end-to-end connection between said roaming terminal and a further terminal (5) by:
- determining at least one session identifier of an ongoing multimedia stream session for identifying the roaming terminal (4),
- on a media overlay level of the multimedia stream session, detecting an address change of the roaming terminal (4) from a changed source address of incoming data packets,
- verifying the roaming terminal (4) by checking said session identifier, and
- redirecting the multimedia stream to the new address, if said data packets originate from the same logical address as before said change of source address,
and **in that** subsequently alternative mediating network elements (8.2, 8.3) for replacing the first mediating network element (8.1) are determined on a control level of the network (1) for a complete handover of the multimedia stream session.

2. The method of claim 1, **characterized in that** the alternative mediating network elements (8.2, 8.3) are determined using a standard protocol, in particular Session Initiation Protocol.

3. The method of claim 1, **characterized in that** the complete handover is performed using a standard session redirect procedure, in particular a SIP-based session redirect procedure, executed by a network softswitch, the mediating network elements (8.1 - 8.3) and the roaming terminal (4).

4. The method of claim 1, **characterized in that** the media overlay level uses a standard protocol, in particular Real-time Transport Protocol.

5. A mediating network element (8.x, 8.1 - 8.3) for providing a multimedia stream to a roaming terminal (4) in a communication network (1), adapted to secure a logical end-to-end connection between said roaming terminal and a further terminal (5), comprising:
- means (8.xd) for determining at least one session identifier of an ongoing multimedia stream session for identifying the roaming terminal (4),
- means (8.xc) for detecting, on a media overlay level of the multimedia stream session, an address change of the roaming terminal (4) from a changed source address of incoming data packets,
- means for verifying the roaming terminal (4) by checking said session identifier, and
- means (8.xe, 8.xg) for redirecting the multimedia stream to the new address, if said data packets originate from the same logical address as before said change of source address.

6. The mediating network element (8.x, 8.1, 8.3) of claim 5, operably connected with a network softswitch, at least one other network mediating element (8.2) for alternatively providing the multimedia stream to the roaming terminal (4) and with the roaming terminal (4), and adapted to perform a complete handover of the multimedia stream session using a standard session redirect procedure, in particular a SIP-based session redirect procedure, executed by the network softswitch, the mediating network elements and the roaming terminal for providing the multimedia stream to the roaming terminal (4) by means of the other mediating network element (8.2).

7. The mediating network element (8.x, 8.1, 8.3) of claim 5, being devised as a session boarder controller and adapted to using Real-time Transport Protocol for providing the multimedia stream as well as SIP for control purposes.

8. A mobile terminal (4) for use as a roaming terminal in a communication network (1), adapted to communicate with other parties (5) in a multimedia stream session via a first mediating network element (8.1), **characterized in that** the mobile terminal (4) is further adapted to continue communicating on an media overlay level of the network
(1) in an ongoing multimedia stream session via the first mediating network element (8.1) while changing network domains (3.1, 3.2) in the communication network (1) and to perform a re-registration at the communication network (1) on a control level of the network (1).

9. A communication network (1), comprising
- a home network (2),
- a plurality of network domains (3.1 - 3.3) operatively attached to the home network (2),
- a plurality of terminals (4, 5) located in different network domains (3.1, 3.3) and adapted to communicate over the communication network (1) in a multimedia stream session,
**characterized in that** at least one of the plurality of terminals is a mobile terminal (4) according to claim 8 and **in that** the home network (2) comprises a plurality of mediating network elements (8.1 - 8.3) according to any one of claims 5 to 7.

10. A computer program product for use in the communication network (1) according to the preamble of claim 9, comprising first program code sequences operable to enable at least one of the plurality of terminals (4) to continue communicating on an overlay media level of the network (1) in an ongoing multimedia stream session via a first mediating network element (8.1) while changing network domains (3.1, 3.2) in the communication network (1) and to perform a re-registration at the communication network (1) on a control level of the network (1), possibly via an alternative mediating network element (8.2), and comprising second program code sequences operable to enable at least the first mediating network element (8.1) of the home network (2) to secure a logical end-to-end connection between said roaming terminal and a further terminal (5) by:
- determining at least one session identifier of an ongoing multimedia stream session for identifying the roaming terminal (4),
- on a media overlay level of the multimedia stream session, detecting an address change of the roaming terminal (4) from a changed source address of incoming data packets,
- verifying the roaming terminal (4) by checking said session identifier, and
- redirecting the multimedia stream to the new address, if said data packets originate from the same logical address as before said change of source address.

## Patentansprüche

1. Ein Verfahren für das nahtlose Handover einer Multimediastrom-Sitzung an ein Roaming-Endgerät (4), **dadurch gekennzeichnet, dass** ein erstes Vermittlungsnetzelement (8.1), welches in einem Kommunikationspfad zum Roaming-Endgerät (4) enthalten ist, eine logische End-to-End-Verbindung zwischen dem besagten Roaming-Endgerät und einem weiteren Endgerät (5) durch folgende Schritte sichert:
- Ermitteln von mindestens einer Sitzungskennung einer bestehenden Multimediastrom-Sitzung zur Identifikation des Roaming-Endgeräts (4),
- auf einer Media-Overlay-Ebene der Multimediastrom-Sitzung, Erkennen einer Änderung der Adresse des Roaming-Endgeräts (4) von einer geänderten Quelladresse von eingehenden Datenpaketen,
- Prüfen des Roaming-Endgeräts (4) durch Überprüfen der besagten Sitzungskennung, und
- Umleiten des Multimediastroms an die neue Adresse, wenn die besagten Datenpakete von der selben logischen Adresse kommen wie vor der besagten Änderung der Quelladresse,
und **dadurch**, dass darauffolgende alternative Vermittlungsnetzelemente (8.2, 8.3) zum Ersetzen des ersten Vermittlungsnetzelement (8.1) auf einer Kontrollebene des Netzwerks (1) für ein komplettes Handover der Multlmediastrom-Sitzung bestimmt werden.

2. Das Verfahren nach Anspruch 1, **dadurch gekennzeichnet, dass** die alternativen Vermittlungsnetzelemente (8.2, 8.3) unter Anwendung eines Standardprotokolls, insbesondere des Session Initiation Protocol, bestimmt werden.

3. Das Verfahren nach Anspruch 1, **dadurch gekennzeichnet, dass** das komplette Handover unter Anwendung einer Standardsitzungsumleitungsprozedur, insbesondere einer SIP-basierten Sitzungsumleitungsprozedur, welche von einem Netzwerk-Softswitch, den Vermittlungsnetzelementen (8.1- 8.3) und dem Roaming-Endgerät (4) ausgeführt wird, erfolgt.

4. Das Verfahren nach Anspruch 1, **dadurch gekennzeichnet, dass** die Media-Overlay-Ebene ein Standardprotokoll, insbesondere das Echtzeit-Transportprotokoll anwendet.

5. Ein Vermittlungsnetzelement (8.x, 8.1- 8.3) zur Bereitstellung eines Multimediastroms an ein Roaming-Endgerät (4) in einem Kommunikationsnetzwerk (1), welches fähig ist, eine logische End-to-End-Verbindung zwischen dem besagten Roaming-Endgerät und einem weiteren Endgerät (5) zu sichern, umfassend:
- Mittel (8.xd) zum Ermitteln von mindestens einer Sitzungskennung einer bestehenden Multimediastrom-Sitzung zur Identifikation des Roaming-Endgeräts (4),
- Mittel (8.xc) zum Erkennen, auf einer Media-Overlay-Ebene der Multimediastrom-Sitzung, einer Änderung der Adresse des Roaming-Endgeräts (4) von einer geänderten Quelladresse von eingehenden Datenpaketen,
- Mittel zum Prüfen des Roaming-Endgeräts (4) durch Überprüfen der besagten Sitzungskennung, und
- Mittel (8.xe, 8.xg) zum Umleiten des Multimediastroms an die neue Adresse, wenn die besagten Datenpakete von der selben logischen Adresse kommen wie vor der besagten Änderung der Quelladresse.

6. Das Vermittlungsnetzelement (8.x, 8.1 - 8.3) nach Anspruch 5, betriebsfähig verbunden mit einem Netzwerk-Softswitch, mindesten einem anderen Netzvermittlungselement (8.2) zum alternativen Bereitstellen des Multimediastroms an das Roaming-Endgerät (4) und mit dem Roaming-Endgerät (4), welches fähig ist, ein komplettes Handover der Multimediastrom-Sitzung unter Anwendung einer Standardsitzungsumleitungsprozedur, insbesondere einer SIP-basierten Sitzungsumleitungsprozedur, welche von einem Netzwerk-Softswitch, den Vermittlungsnetzelementen (8.1 - 8.3) und dem Roaming-Endgerät (4) ausgeführt wird, zu gewährleisten, um den Multimediastrom anhand des anderen Vermittlungsnetzelement (8.2) an das Roaming-Endgerät (4) bereitzustellen.

7. Das Varmittlungsnetzelement (8.x. 8.1, 8.3) nach Anspruch 5, welches wie ein Session Boarder Controller ausgelegt und fähig ist, ein Echtzeit-Transportprotokoll zum Bereitstellen des Multimediastroms sowie SIP für Prüfzwecke anzuwenden.

8. Ein mobiles Endgerät (4) zur Verwendung als Roaming-Endgerät in einem Kommunikationsnetzwerk (1), welches fähig ist, mit anderen Teilnehmern (5) in einer Multimediastrom-Sitzung über ein erstes Vermittlungsnetzelement (8.1) zu kommunizieren, **dadurch gekennzeichnet, dass** das mobile Endgerät (4) weiterhin fähig ist, das Kommunizieren auf einer Media-Overlay-Ebene des Netzwerks (1) In einer bestehenden Multimediastrom-Sitzung über das erste Vermittlungsnetzelement (8.1) während des Wechselns von Netzwerkdomänen (3,1, 3.2) im Kommunikationsnetzwerk (1) fortzuführen und ein erneutes Registrieren am Kommunikationsnetzwerk (1) auf einer Kontrollebene des Netzwerks (1) auszuführen.

9. Ein Kommunikationsnetzwerk (1), umfassend:
- Ein Heimnetzwerk (2),
- Eine Vielzahl von Netzwerkdomänen (3.1- 3.3), welche betriebsfähig an das Heimnetzwerk (2) angeschlossen sind,
- Eine Vielzahl von Endgeräten (4, 5) In verschiedenen Netzwerkdomänen (3.1, 3.3), welche fähig sind, über das Kommunikationsnetzwerk (1) in einer Multimediastrom-Sitzung zu kommunizieren,
**dadurch gekennzeichnet, dass** mindestens eines der Vielzahl von Endgeräten ein mobiles Endgerät (4) entsprechend Anspruch 8 ist, und dass das Heimnetzwerk (2) eine Vielzahl von Vermittlungsnetzelementen (8.1 - 8.3) entsprechend einem beliebigen der Ansprüche 5 bis 7 umfasst.

10. Ein Computerprogramm-Produkt zur Verwendung in dem Kommunikationsnetzwerk (1) entsprechend der Einleitung von Anspruch 9, welches erste Programmcode-Sequenzen umfasst, die fähig sind, mindestens einem der Vielzahl von Endgeräten (4) das Fortführen des Kommunizierens auf einer Overlay Media-Ebene des Netzwerks (1) in einer bestehenden Multimediastrom-Sitzung über ein erstes Vermittlungsnetzwerkelement (8.1) während des Wechselns von Netzwerkdomänen (3.1, 3.2) in dem Kommunikationsnetzwerk (1) zu ermöglichen und ein erneutes Registrieren am Kommunikationsnetzwerk (1) auf einer Kontrollebene des Netzwerks (1), möglicherweise über ein alternatives Vermittlungsnetzelement (8.2), auszuführen, und welches zweite Programmcode-Sequenzen umfasst, die fähig sind, mindestens dem ersten Vermittlungsnetzelement (8.1) des Heimnetzwerks (2) das Sichern einer logischen End-to-End-Verbindung zwischen dem besagten Roaming-Endgerät und einem weiteren Endgerät (5) zu ermöglichen, durch,
- Ermitteln von mindestens einer Sitzungskennung, einer bestehenden Multlmediastrom-Sitzung zur Identifikation des Roaming-Endgeräts (4),
- auf einer Media-Overlay-Ebene der Multimediastrom-Sitzung, Erkennen einer Änderung der Adresse des Roaming-Endgeräts (4) von einer geänderten Quelladresse von eingehenden Datenpaketen,
- Prüfen des Roaming-Endgeräts (4) durch Überprüfen der besagten Sitzungskennung, und
- Umleiten des Multimediastroms an die neue Adresse, wenn die besagten Datenpakete von der selben logischen Adresse kommen wie vor der besagten Änderung der Quelladresse.

## Revendications

1. Procédé de transfert en douceur d'une session de flux multimédia vers un terminal en itinérance (4), **caractérisé en ce qu'**un premier élément de réseau intermédiaire (8.1), compris dans un trajet de communication vers le terminal en itinérance (4), sécurise une connexion de bout en bout logique entre ledit terminal en itinérance et un autre terminal (5) en :
- déterminant au moins un identifiant de session d'une session de flux multimédia en cours pour l'identification du terminal en itinérance (4),
- sur un niveau de superposition de support de la session de flux multimédia, détection d'un changement d'adresse du terminal en itinérance (4) par rapport à une adresse source modifiée des paquets de données entrants,
- vérification du terminal en itinérance (4) en contrôlant ledit identifiant de session et
- réacheminement du flux multimédia vers la nouvelle adresse si lesdits paquets de données proviennent de la même adresse logique qu'avant ledit changement d'adresse source,
et **en ce que** des éléments de réseau intermédiaires (8.2, 8.3) alternatifs suivants sont déterminés pour remplacer le premier élément de réseau intermédiaire (8.1) sur un niveau de commande du réseau (1) pour un transfert complet de la session de flux multimédia.

2. Procédé selon la revendication 1, **caractérisé en ce que** les éléments de réseau intermédiaires (8.2, 8.3) alternatifs sont déterminés en utilisant un protocole standard, notamment un protocole d'initiation de session.

3. Procédé selon la revendication 1, **caractérisé en ce que** le transfert complet est réalisé en utilisant une procédure de réacheminement de session standard, notamment une procédure de réacheminement basée sur le SIP, exécutée par un commutateur logiciel de réseau, les éléments de réseau intermédiaires (8.1 - 8.3) et le terminal en itinérance (4).

4. Procédé selon la revendication 1, **caractérisé en ce que** le niveau de superposition de support utilise un protocole standard, notamment un protocole en temps réel.

5. Élément de réseau intermédiaire (8.x, 8.1 - 8.3) pour délivrer un flux multimédia à un terminal en itinérance (4) dans un réseau de communication (1), conçu pour sécuriser une connexion de bout en bout entre ledit terminal en itinérance et un autre terminal (5), comprenant :
- des moyens (8.xd) pour déterminer au moins un identifiant de session d'une session de flux multimédia en cours pour l'identification du terminal en itinérance (4),
- des moyens (8.xc) pour détecter, sur un niveau de superposition de support de la session de flux multimédia, un changement d'adresse du terminal en itinérance (4) par rapport à une adresse source modifiée des paquets de données entrants,
- des moyens pour vérifier le terminal en itinérance (4) en contrôlant ledit identifiant de session et
- des moyens (8.xe, 8.xg) pour réacheminer le flux multimédia vers la nouvelle adresse si lesdits paquets de données proviennent de la même adresse logique qu'avant ledit changement d'adresse source.

6. Élément de réseau intermédiaire (8.x, 8.1 - 8.3) selon la revendication 5, connecté de manière opérationnelle avec un commutateur logiciel de réseau, au moins un autre élément de réseau intermédiaire (8.2) pour délivrer en alternance le flux multimédia au terminal en itinérance (4) et avec le terminal en itinérance (4), et conçu pour effectuer un transfert complet de la session de flux multimédia en utilisant une procédure de réacheminement de session standard, notamment une procédure de réacheminement de session basée sur le SIP, exécutée par le commutateur logiciel de réseau, les éléments de réseau intermédiaires et le terminal en itinérance pour délivrer le flux multimédia au terminal en itinérance (4) au moyen de l'autre élément de réseau intermédiaire (8.2).

7. Élément de réseau intermédiaire (8.x, 8.1- 8.3) selon la revendication 5, élaboré comme un contrôleur interne à la session et conçu pour utiliser le protocole de transport en temps réel pour délivrer le flux multimédia ainsi que le SIP à des fins de commande.

8. Terminal mobile (4) destiné à être utilisé comme un terminal en itinérance dans un réseau de communication (1), conçu pour communiquer avec d'autres parties (5) dans une session de flux multimédia par le biais d'un premier élément de réseau intermédiaire (8.1), **caractérisé en ce que** le terminal mobile (4) est en plus conçu pour continuer de communiquer sur un niveau de superposition de support du réseau (1) dans une session de flux multimédia entrante par le biais du premier élément de réseau intermédiaire (8.1) tout en modifiant les domaines de réseau (3.1, 3.2) dans le réseau de communication (1) et pour effectuer un réenregistrement au niveau du réseau de communication (1) sur un niveau de commande du réseau (1).

9. Réseau de communication (1) comprenant
- un réseau de rattachement (2),
- une pluralité de domaines de réseau (3.1 - 3.3) reliés de manière opérationnelle au réseau de rattachement (2),
- une pluralité de terminaux (4, 5) se trouvant dans différents domaines de réseau (3.1, 3.3) et conçus pour communiquer sur le réseau de communication (1) dans une session de flux multimédia,
**caractérisé en ce qu'**au moins un parmi la pluralité de terminaux est un terminal mobile (4) selon la revendication 8 et **en ce que** le réseau de rattachement (2) comprend une pluralité d'éléments de réseau intermédiaires (8.1 - 8.3) selon l'une quelconque des revendications 5 à 7.

10. Programme Informatique destiné à être utilisé dans le réseau de communication (1) selon le préambule de la revendication 9, comprenant des premières séquences de code de programme pouvant être utilisées pour activer au moins l'un de la pluralité de terminaux (4) pour continuer de communiquer sur un niveau de support superposé du réseau (1) dans une session de flux multimédia en cours par le biais d'un premier élément de réseau intermédiaire (8.1) tout ne changeant de domaine de réseau (31, 3.2) dans le réseau de communication (1) et pour effectuer un réenregistrement au niveau du réseau de communication (1) sur un niveau de commande du réseau (1), si possible par le biais d'un élément de réseau intermédiaire (8.2) alternatif, et comprenant des deuxièmes séquences de code de programme pouvant être utilisée pour activer au moins le premier élément de réseau intermédiaire (8.1) du réseau de rattachement (2) pour sécuriser une connexion de bout en bout logique entre ledit terminal en itinérance et un autre terminal (5) en :
- déterminant au moins un identifiant de session d'une session de flux multimédia en cours pour l'identification du terminal en itinérance (4),
- sur un niveau de superposition de support de la session de flux multimédia, détection d'un changement d'adresse du terminal en itinérance (4) par rapport à une adresse source modifiée des paquets de données entrants,
- vérification du terminal en itinérance (4) en contrôlant ledit identifiant de session et
- réacheminement du flux multimédia vers la nouvelle adresse si lesdits paquets de données proviennent de la même adresse logique qu'avant ledit changement d'adresse source.
